# EUROPÄISCHE PATENTANMELDUNG

(11) **EP 1 442 778 A1**
(43) Veröffentlichungstag der Anmeldung: **04.08.2004**
(21) Anmeldenummer: 04000288.3
(22) Anmeldetag: 09.01.2004
(51) Int. Cl.: B01D 53/00, B01D 53/34, F23G 7/06, B01D 53/44, B01D 53/72

(54) **Verfahren zur oxidativen Reinigung eines Sauerstoff und eine brennbare Komponente enthaltenden Abgases**

(30) Priorität: 03.02.2003 DE 10304155
(71) Anmelder: BASF AKTIENGESELLSCHAFT, 67056 Ludwigshafen (DE)
(72) Erfinder: Schiketanz, Walter, Dr., 67227 Frankenthal (DE)

(57) **Zusammenfassung**

Verfahren zur oxidativen Reinigung eines Sauerstoff und eine brennbare Komponente enthaltenden Abgases (1) durch oxidative Umsetzung in einem Oxidationsreaktor (B), bei dem das Abgas vor der Einleitung in den Oxidationsreaktor (B) eine Geschwindigkeitsstrecke (A) durchläuft, in der die Strömungsgeschwindigkeit des hindurchströmenden Gases höher ist als die Flammenrückschlagsgeschwindigkeit und bei dem man einen Teilstrom (5) des bei der oxidativen Umsetzung frei werdenden Rauchgases zur Geschwindigkeitsstrecke (A) zurückführt.

## Beschreibung

Die vorliegende Erfindung betrifft ein Verfahren zur oxidativen Reinigung eines Sauerstoff und eine brennbare Komponente enthaltenden Abgases durch oxidative Umsetzung in einem Oxidationsreaktor, bei dem das Abgas vor der Einleitung in den Oxidationsreaktor eine Geschwindigkeitsstrecke durchläuft, in der die Strömungsgeschwindigkeit des hindurchströmenden Gases höher ist als die Flammenrückschlagsgeschwindigkeit.

Abgase, welche eine brennbare Komponente zusammen mit Sauerstoff enthaltenden werden bei vielen verschiedenen Verfahren wie beispielsweise Oxidationsverfahren in der Chemie, Lackierverfahren oder bei Verfahren zur chemischen Reinigung gebildet. Aufgrund des simultanen Gehalts eines Oxidationsmittels (Sauerstoff) und einer brennbaren Komponente bedarf die thermische Reinigung derartiger Abgase, also deren Verbrennung, besonderer Sicherheitsmaßnahmen, insbesondere in Bezug auf eine sichere und verlässliche Vermeidung von Flammenrückschlägen.

Eine Übersicht über oxidative Reinigungsverfahren von Abgasen, insbesondere über die katalytischen und thermischen Reinigungsverfahren findet sich in J.M. Klobucar, Chem. Eng., February 2002, Seite 62 bis 67.

Bei der katalytischen Abgasreinigung wird das Abgas bei Temperaturen von typischerweise 200 bis 650°C in Gegenwart von Luft und eines Katalysators katalytisch in umweltfreundlichere Verbindungen überführt. Durch den Einsatz von Katalysatoren wird gegenüber einer reinen Verbrennung des Abgases eine weitaus niedrigere Betriebstemperatur ermöglicht, was zu Vorteilen in der Gesamtenergiebilanz und der Werkstoffwahl führt. Die Nachteile der katalytischen Abgasreinigung stehen in engem Zusammenhang mit dem Einsatz der Katalysatoren. Diese enthalten zumeist Edelmetalle wie etwa Palladium oder Platin und neigen daher bei Kontakt mit verschiedenen Verbindungen zur reversiblen oder irreversiblen Schädigung. Ist mit derartigen Verbindungen, sogenannten Katalysatorgiften, zu rechnen, so ist im Allgemeinen ein Guardbett vorzuschalten. Da die Katalysatoren auch bei Abwesenheit von Katalysatorgiften nur eine begrenzte Lebensdauer besitzen, ist für einen verlässlichen und dauerhaften Betrieb einer katalytischen Abgasreinigung häufig eine doppelte Ausführung des Oxidationsreaktors erforderlich. Des Weiteren besteht bei Abgasen mit einem hohen Gehalt an brennbaren Komponenten die Gefahr zu hoher Reaktionstemperaturen und eines Flammenrückschlags sowie die Gefahr einer Schädigung des Katalysators und der Anlage.

Bei der thermischen Abgasreinigung wird das Abgas bei Temperaturen von typischerweise 800 bis 1000°C in Gegenwart von Luft und gegebenenfalls eines sogenannten Stützbrennstoffs zu umweltfreundlicheren Verbindungen, zumeist Wasser und Kohlendioxid, verbrannt. Man unterscheidet im Allgemeinen zwischen einem Direktflammen-Oxidator, einem rekuperativen Oxidator und einem regenerativen Oxidator.

Beim Direktflammen-Oxidator wird das nicht vorgewärmte, zu reinigende Abgas mit Luft in einer Flamme, welche durch einen Stützbrennstoff wie beispielsweise Erdgas oder Öl erzeugt wird, verbrannt. Um einen Flammenrückschlag zu vermeiden, befindet sich in der Regel am Eintritt der Brennkammer eine Geschwindigkeitsstrecke, bei der die Strömungsgeschwindigkeit des zugeführten Abgases höher ist als die Flammenrückschlagsgeschwindigkeit. Nachteilig am Direktflammen-Oxidator ist der hohe Verbrauch an Stützbrennstoff, insbesondere bei niedriger Konzentration an brennbaren Komponenten, da das zu verbrennende Abgas relativ kalt eingespeist wird und somit erst mit Hilfe der Verbrennungswärme des Stützbrennstoffs auf die gewünschte Verbrennungstemperatur gebracht werden muss.

Beim rekuperativen Oxidator wird das nicht vorgewärmte, zu reinigende Abgas durch die Abwärme der idealerweise autothermen Verbrennung im Oxidator vorgeheizt und anschließend in der eigentlichen Brennkammer mit Luft verbrannt. Die Vorheizung erfolgt dabei im Allgemeinen derart, dass das zugeführte Abgas vor Eintritt in die Brennkammer erst durch einen Wärmetauscher, welcher auf der anderen Seite mit dem heißen Rauchgas betrieben wird, strömt. Reicht der Gehalt an brennbaren Komponenten zur autothermen Verbrennung nicht aus, kann die fehlende Energie durch einen Hilfsbrenner eingebracht werden. Erst durch die genannte Vorheizung wird eine weitgehend autotherme Verbrennung ermöglicht, da das zu verbrennende Abgas bereits heiß in die Brennkammer strömt. Genau dies hat jedoch auch einen entscheidenden Nachteil. Da mit steigender Temperatur im Abgas auch dessen Zündwilligkeit steigt, besteht die Gefahr des Flammenrückschlags bis in den Wärmetauscher hinein und somit die Gefahr größerer Schäden. Diese Gefahr ist umso ausgeprägter je höher die Konzentration an brennbaren Komponenten liegt und je geringer die Strömungsgeschwindigkeit ist. Daher ist insbesondere bei Abgasen mit hoher Konzentration an brennbaren Komponenten und/oder starken Schwankungen in der Zusammensetzung und Menge der sichere Einsatz eines rekuperativen Oxidators nicht gewährleistet.

Beim regenerativen Oxidator wird das nicht vorgewärmte, zu reinigende Abgas über ein heißes Wärmespeichermedium vorgeheizt und in einer sich anschließenden Brennkammer idealerweise autotherm verbrannt. Die heißen Rauchgase werden dann über ein zweites Wärmespeichermedium, welche sich gerade im regenerativen Modus befindet, geleitet und heizen dieses dabei auf. Hat das erstgenannte Wärmespeichermedium soviel an Temperatur verloren, dass die gewünschte Verbrennung nicht mehr gewährleistet ist, so wird über Kreuz umgeschaltet und das zweite, aufgeheizte Wärmespeichermedium zur Aufheizung genutzt. Reicht der Gehalt an brennbaren Komponenten zur autothermen Verbrennung nicht aus, kann die fehlende Energie durch einen Hilfsbrenner eingebracht werden. Auch beim regenerativen Oxidator ist erst durch die genannte Vorheizung eine weitgehend autotherme Verbrennung möglich. Wie bereits zuvor beim rekuperativen Oxidator beschrieben, besteht auch beim regenerativen Oxidator bei Abgasen mit hoher Konzentration an brennbaren Komponenten die Gefahr, dass die Oxidationsreaktion bereits im Bett des Wärmespeichermediums durchgeht, das heißt zu einem unkontrollierten Temperaturanstieg führt, welcher die Anlage schädigen kann. Auch besteht damit die Gefahr des Flammenrückschlags bis in den Wärmetauscher hinein und somit die Gefahr größerer Schäden. Daher ist bei Abgasen mit hoher Konzentration an brennbaren Komponenten und/oder starken Schwankungen in der Zusammensetzung und Menge der sichere Einsatz eines regenerativen Oxidators nicht gewährleistet. Ferner ist der regenerative Oxidator aufgrund seiner mindestens zwei Wärmespeicher-Kammern, welche jeweils für eine Aufheizung des nicht vorgewärmten Abgases ausgelegt sind, sehr groß und apparativ aufwändig.

Um einen Flammenrückschlag sicher zu unterbinden, werden in der Abgaszufuhr zum Oxidator im Allgemeinen mehrere und voneinander unabhängige Sicherheitsmaßnahmen, wie Flammensperren und/oder Verdünnung des Abgases eingesetzt. Übersichten hierzu finden sich beispielsweise in G.-G. Börger et al., VDI-Berichte Nr. 286, 1977, Seite 131 bis 134, in K. Schampel et al., Gas wärme international 27, 1978, November, Seite 629 bis 635 und in W. Hüning, Chem.-Ing.-Tech. 57, 1985, Seite 850 bis 857. Bekannte Flammensperren sind beispielsweise Tauchsicherungen, Flammenfilter, Bandsicherungen, Detonationssicherungen, Geschwindigkeitsstrecken, Zuführungen von Frischluft oder rückzündsichere Eindüsungen in die Brennkammer. Eine entsprechende Verdünnung des Abgases kann beispielsweise mit Luft erreicht werde. So ist in der letztgenannten Literaturstelle in der dortigen Abbildung 5 eine Kombination aus Tauchsicherung, Frischluftzufuhr mit Geschwindigkeitsstrecke, Detonationssicherung und rückzündsichere Eindüsung in die Brennkammer. Der Einsatz einer Geschwindigkeitsstrecke ermöglicht zwar bei Aufrechterhaltung der nötigen Mindestgeschwindigkeit eine sichere Unterbindung des Flammenrückschlags, besitzt aber den entscheidenden Nachteil, dass durch die Zufuhr weiterer Luft zur Aufrechterhaltung der erforderlichen Strömungsgeschwindigkeit die Gesamtmenge an Abgas steigt und somit auch gegebenenfalls der Energiebedarf für dessen Aufheizung vor der Verbrennung.

Es bestand daher die Aufgabe, ein Verfahren zur Reinigung eines Sauerstoff und eine brennbare Komponente enthaltenden Abgases zu finden, welches die oben genannten Nachteile nicht besitzt, einen sicherheitstechnisch sicheren Dauerbetrieb gewährleistet, energetisch gesehen auch bei einer deutlichen Unterschreitung der unteren Explosionsgrenze des anfallenden Abgases weitgehend autark ist und insbesondere auch wechselnde Abgasmengen und wechselnde Abgaszusammensetzungen problemlos verkraftet.

Demgemäss wurde ein Verfahren zur oxidativen Reinigung eines Sauerstoff und eine brennbare Komponente enthaltenden Abgases durch oxidative Umsetzung in einem Oxidationsreaktor, bei dem das Abgas vor der Einleitung in den Oxidationsreaktor eine Geschwindigkeitsstrecke durchläuft, in der die Strömungsgeschwindigkeit des hindurchströmenden Gases höher ist als die Flammenrückschlagsgeschwindigkeit, gefunden, das dadurch gekennzeichnet ist, dass man einen Teilstrom des bei der oxidativen Umsetzung frei werdenden Rauchgases zur Geschwindigkeitsstrecke zurückführt.

Unter der oxidativen Reinigung ist im Rahmen der vorliegenden Erfindung die oxidative Umsetzung eines eine brennbare Komponente enthaltenden Abgases mit Sauerstoff zu verstehen. Die oxidative Umsetzung kann dabei sowohl katalytisch als auch nicht-katalytisch erfolgen. Als nicht-katalytische Umsetzung sei die Verbrennung genannt, welche im Allgemeinen auch als thermische Umsetzung bezeichnet wird. Bei der oxidativen Reinigung wird das zugeführte Abgas in überwiegend umweltfreundlichere Verbindungen überführt. Enthält das Abgas als brennbare Komponenten nur Wasserstoff, Kohlenstoff und/oder Sauerstoff enthaltende Verbindungen, so werden diese in der Regel zu Wasser und Kohlendioxid umgesetzt. Enthält das Abgas zudem noch weitere Elemente, wie beispielsweise Chlor oder Schwefel, so werden diese in stabilere Chlor- oder Schwefelverbindungen, wie beispielsweise Chlorwasserstoff, Chloroxide oder Schwefeloxide, überführt. Das durch die oxidative Umsetzung erhaltene Gas wird als sogenanntes Rauchgas bezeichnet.

Wesentlich beim erfindungsgemäßen Verfahren ist der Einsatz einer Geschwindigkeitsstrecke vor der Einleitung des Abgases in den Oxidationsreaktor, in der die Strömungsgeschwindigkeit des hindurchströmenden Gases höher ist als die Flammenrückschlagsgeschwindigkeit und zu der ein Teilstrom des bei der oxidativen Umsetzung frei werdenden Rauchgases zurückführt wird.

Als Geschwindigkeitsstrecken können beim erfindungsgemäßen Verfahren prinzipiell alle Vorrichtungen eingesetzt werden, durch die das Abgas zusammen mit dem rückgeführten Rauchgas mit der erforderlichen Strömungsgeschwindigkeit strömen kann, um einen Flammenrückschlag zu verhindern. Die Geschwindigkeitsstrecke kann sich beispielsweise als separate Vorrichtung in der Zufuhrleitung des Abgases zum Oxidationsreaktor oder aber auch direkt am Eingang des Oxidationsreaktors, beispielsweise in Form einer oder mehrere Düsen, befinden. Ferner ist im Rahmen der vorliegenden Erfindung auch ein Hochgeschwindigkeitsventil, wie es beispielsweise in der Norm DIN EN 12874:2001 unter Punkt 3.1.18 beschrieben ist, als Geschwindigkeitsstrecke zu verstehen. In der Regel umfassen sie ein oder mehrere Rohre mit einem hydraulischen Innendurchmesser von im Allgemeinen 5 bis 50 mm und bevorzugt 5 bis 30 mm. Ihre Länge beträgt üblicherweise 0,1 bis 5 m und bevorzugt 0,5 bis 2 m. Die Geschwindigkeitsstrecke befindet sich in Strömungsrichtung gesehen stets vor dem Anlagenteil, in dem die Oxidationsreaktion stattfindet. Vorteilhafterweise sollte die zu durchströmende Strecke zwischen der Geschwindigkeitsstrecke und dem Anlagenteil, in dem die Oxidationsreaktion stattfindet so kurz wie möglich sein.

Unter der Strömungsgeschwindigkeit des durch die Geschwindigkeitsstrecke hindurchströmenden Gases ist die mittlere Gasgeschwindigkeit in den einzelnen Rohren oder Kanälen der Geschwindigkeitsstrecke zu verstehen, wobei sich die Strömungsgeschwindigkeit auf das durch die Geschwindigkeitsstrecke hindurchströmende Gas unter den dort vorliegenden Bedingungen (Temperatur, Druck) bezieht. Die Strömungsgeschwindigkeit kann dabei direkt in der Geschwindigkeitsstrecke oder auch vor oder nach der Geschwindigkeitsstrecke gemessen werden, wobei in den beiden zuletzt genannten Fällen eine entsprechende Umrechnung unter Einbeziehung der einzelnen Querschnitte und der eventuellen Unterschiede in der Temperatur und dem Druck durchzuführen ist. Im Allgemeinen wird die Strömungsgeschwindigkeit direkt vor der Geschwindigkeitsstrecke gemessen. Als Geräte zur Messung der Strömungsgeschwindigkeit kommen die dem Fachmann allgemein bekannten Geräte in Betracht, wobei natürlich auf eine entsprechende Beständigkeit gegenüber der vorliegenden Temperatur und des hindurchströmenden Mediums zu achten ist. Als Beispiele geeigneter Geräte seien Differenzdruck-, Geschwindigkeits- und Massendurchflussmessgeräte, insbesondere nach Pitot-, Prandtl-, Stauscheiben- (Target-), Wirbel- (Vortex-), Ultraschall- und Hitzdraht-Geräte genannt, wie sie beispielsweise in J.W. Dolenc, Chem. Eng. Prog., January 1996, Seite 22 bis 32 beschrieben sind. Um eine korrekte Messung der Strömungsgeschwindigkeit sicherzustellen, ist es in vielen Fällen vorteilhaft, direkt vor dem eigentlichen Messgerät einen sogenannten Strömungsgleichrichter einzusetzen, insbesondere bei den Fällen, in denen aufgrund des Rohrinnendurchmessers und der Strömungsgeschwindigkeit von einem entsprechenden Anteil an turbulenter Strömung auszugehen ist.

Unter der Flammenrückschlagsgeschwindigkeit ist diejenige Strömungsgeschwindigkeit des hindurchströmenden Gases zu verstehen, bei der in dem zu betrachtenden Leitungsstück unter der Annahme, dass sich am Ende dieses Leitungsstücks eine stabilisierte Zündflamme befinden würde, gerade ein Flammenrückschlag auftreten würde. Im Rahmen der vorliegenden Erfindung handelt es sich bei dem zu betrachtenden Leitungsstück um die Geschwindigkeitsstrecke.

DIN EN 12874:2001 gibt in Abschnitt 9.2 eine Messvorschrift wieder, nach der die Flammenrückschlagsgeschwindigkeit experimentell bestimmt werden kann. Hierzu wird eine Prüfapparatur gemäß Bild 6 der zitierten Norm mit der entsprechenden Geschwindigkeitsstrecke als zu messendes Leitungsstück eingesetzt. Am Ende der Geschwindigkeitsstrecke befindet sich wie in Bild 6 dargestellt eine stabilisierte Zündflamme. Das zu messende Abgas beziehungsweise eine dieser Zusammensetzung entsprechende Gasmischung wird nun bei der gewünschten Betriebstemperatur durch die Geschwindigkeitsstrecke geleitet. Dabei wird mit einer Strömungsgeschwindigkeit begonnen, die höher ist als die Flammenrückschlagsgeschwindigkeit und nun solange reduziert, bis ein Flammenrückschlags auftritt. Die Messung ist entsprechende der zitierten Norm dreimal zu wiederholen und die größte Strömungsgeschwindigkeit, die zu einem Flammenrückschlag führte, als Flammenrückschlagsgeschwindigkeit zu dokumentieren.

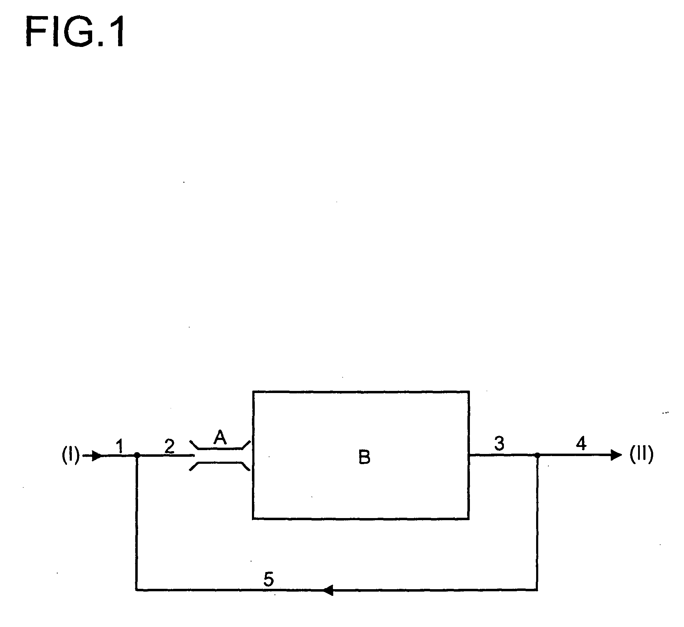

Abbildung 1 zeigt ein Blockdiagramm des erfindungsgemäßen Verfahrens. Abgas (I) wird über Leitung (1) und (2) zur Geschwindigkeitsstrecke (A) geführt, in der die Strömungsgeschwindigkeit des hindurchströmenden Gases höher ist als die Flammenrückschlagsgeschwindigkeit, und nach Durchströmen der Geschwindigkeitsstrecke (A) in den Oxidationsreaktor (B) geleitet. Dort erfolgt die oxidative Umsetzung zum Rauchgas, welches über Leitung (3) und (4) als Rauchgas (II) die Vorrichtung zur oxidativen Reinigung verlässt. Über Leitung (5) wird ein Teilstrom des Rauchgases zur Geschwindigkeitsstrecke (A) zurückgeführt.

Beim erfindungsgemäßen Verfahren stellt man durch die Rückführung von Rauchgas in der Geschwindigkeitsstrecke eine Strömungsgeschwindigkeit ein, welche bevorzugt mindestens das 1,2-fache, besonders bevorzugt mindestens das 1,5-fache und ganz besonders bevorzugt mindestens das 2-fache der Flammenrückschlagsgeschwindigkeit beträgt.

Die Einstellung der gewünschten Strömungsgeschwindigkeit in der Geschwindigkeitsstrecke erfolgt bevorzugt durch eine volumenstromgeregelte Rückführung des Rauchgases, wobei man als Regelgröße die Strömungsgeschwindigkeit in der Geschwindigkeitsstrecke heranzieht. Durch die Überwachung der Strömungsgeschwindigkeit und die daran gebundene volumenstromgeregelte Rückführung des Rauchgases zur Erreichung des Sollwertes wird ein besonders sicheres Verfahren gewährleistet, da dadurch Schwankungen in der Abgasmenge ausgeglichen werden können. Der einzustellende Sollwert der Strömungsgeschwindigkeit wird im Allgemeinen unter Heranziehung des oben genannten Wertes der Flammenrückschlagsgeschwindigkeit ermittelt.

Bei Abgasen, die kontinuierlich oder intermittierend höhere Konzentrationen an brennbaren Bestandteilen aufweisen, kann, um die Temperatur im Oxidationsreaktor unter einem bestimmten Wert oder in einem bestimmten Bereich zu halten, auch die Strömungsgeschwindigkeit in der Geschwindigkeitsstrecke über das genannte Vielfache hinaus erhöht werden. Ebenso kann alternativ oder zusätzlich Rauchgas oder Luft direkt, das heißt ohne über die Geschwindigkeitsstrecke zu führen, in den Oxidationsreaktor eingebracht werden.

Um die oxidative Umsetzung im Oxidationsreaktor zu fördern, ist es insbesondere bei Abgasen mit geringer Konzentration an brennbaren Komponenten vorteilhaft, bereits vorgeheiztes Abgas in den Oxidationsreaktor einzuleiten. Dadurch wird wegen der geringeren Differenz zwischen der Temperatur des einzuleitenden vorgeheizten Abgases und der Oxidationstemperatur dem Oxidationsreaktor weniger Wärme entzogen und somit die oxidative Umsetzung gefördert. Besonders vorteilhaft heizt man beim erfindungsgemäßen Verfahren das Abgas vor der Geschwindigkeitsstrecke über einen mit der Abwärme des Rauchgases betriebenen Wärmetauscher vor. Die Abwärme des Rauchgases kann dabei direkt in Form eines mit dem Rauchgas betriebenen Wärmetauschers oder indirekt, beispielsweise durch Gewinnung von Dampf und Vorheizung des Abgases durch einen mit diesem Dampf betriebenen Wärmetauscher, erfolgen. Über die bereits oben beschriebene gezielte Einstellung der Strömungsgeschwindigkeit in der Geschwindigkeitsstrecke wird auch bei der Zufuhr von vorgeheiztem Abgas ein sicherer Betrieb gewährleistet.

Bei der oben genannten Vorheizung des Abgases ist zu beachten, dass die untere Explosionsgrenze temperaturabhängig ist und somit ein bei niedriger Temperatur nicht explosionsfähiges Gemisch durch Vorwärmung in den explosionsfähigen Bereich gelangen kann. In diesem Fall würden bereits kleinste Zündquellen eine Explosion im betreffenden Anlagenteil verursachen. Beim erfindungsgemäßen Verfahren sollte daher aus sicherheitstechnischen Überlegungen sichergestellt sein, dass der explosionsfähige Bereich vermieden wird. Daher sollte die Temperatur des vorgeheizten Abgases unterhalb der Temperatur der unteren Explosionsgrenze liegen. Als untere Explosionsgrenze ist dabei die unter dem vorhandenen Druck und der vorhandenen Gaszusammensetzung maßgebende Explosionsgrenze zu verstehen.

Beim Einsatz eines bezüglich seiner Zusammensetzung gleichbleibenden Abgases reicht es im Allgemeinen aus, die Temperatur der unteren Explosionsgrenze im Vorfeld experimentell oder rechnerisch zu bestimmen und auf Basis diesen Wertes die maximale Temperatur für das vorgeheizte Abgas festzulegen.

Beim Einsatz eines bezüglich seiner Zusammensetzung sich ändernden Abgases ist es aus sicherheitstechnischen Betrachtungen heraus vorteilhaft, die Temperatur der unteren Explosionsgrenze kontinuierlich oder intermittierend zu überwachen. Für die Überwachung der unteren Explosionsgrenze geeignet sind beispielsweise sogenannte Gaswarngeräte. Bei den Gaswarngeräten wird beispielsweise eine Probe des zu messenden Gases katalytisch verbrannt und über die erzeugte Wärmetönung die aktuelle Konzentration brennbarer Gase errechnet. Aus der aktuellen Konzentration folgt dann aus der vorher zu ermittelnden Abhängigkeit der unteren Explosionsgrenze von der Konzentration brennbarer Gase die entsprechende Temperatur. Das Signal des Gaswarngeräts kann neben der beschriebenen Überwachung der oxidativen Reinigung des Abgases beispielsweise auch für die Steuerung der vorgeschalteten Prozessschritte eingesetzt werden und beispielsweise Sicherheitsschaltungen aktivieren.

In einer bevorzugten Variante des erfindungsgemäßen Verfahrens misst man die Konzentration brennbarer Gase vor dem Wärmetauscher, das heißt im nicht vorgewärmten Abgas. Auf Basis der daraus ermittelten Temperatur der unteren Explosionsgrenze wird dann die einzustellende Wunschtemperatur des Abgases festgelegt und der Wärmetauscher entsprechend betrieben. Ist zudem noch sichergestellt, dass die Strömungszeit des Abgases zwischen der Analysenstelle und dem Wärmetauscher größer ist als die gesamte Ansprechzeit der gesamten Regelung, kann selbst bei großen Schwankungen in der Zusammensetzung des Abgases ein sicherer Betrieb gewährleistet werden.

Bevorzugt stellt man beim erfindungsgemäßen Verfahren die Temperatur des vorgeheizten Abgases derart ein, dass die untere Explosionsgrenze unter dem vorhandenen Druck und der vorhandenen Gaszusammensetzung bei mindestens dem ⁴/₃-fachen Wert, besonders bevorzugt bei mindestens dem 2-fachen Wert und ganz besonders bevorzugt bei mindestens dem 4-fachen Wert der vorliegenden Konzentration an brennbaren Komponenten liegt. Die genannten Einstellungen zeichnen sich durch besonders hohe Sicherheitsreserven aus.

Stammt das Abgas aus einer heterogenkatalysierten Gasphasenoxidation, so ist davon auszugehen, dass die untere Explosionsgrenze des erhaltenen Reaktoraustrags bei einer Temperatur oberhalb der heißesten Temperatur der heterogenkatalysierten Gasphasenoxidation liegt. Da aus dem erhaltenen Reaktoraustrag üblicherweise das gebildete Wertprodukt entfernt wird, bleibt als Abgas ein Gas übrig, welches eine deutlich niedrigere Konzentration an brennbaren Komponenten aufweist als der erhaltene Reaktoraustrag. Somit liegt die untere Explosionsgrenze dieses Abgases sogar bei noch höherer Temperatur als jene des erhaltenen Reaktoraustrags. Daher ist es beim Einsatz eines Abgases, welches aus einer heterogenkatalysierten Gasphasenoxidation stammt, besonders vorteilhaft, die Temperatur des vorgeheizten Abgases derart einzustellen, dass sie maximal der heißesten Temperatur der heterogenkatalysierten Gasphasenoxidation entspricht. Diese Variante bietet auch ohne kontinuierliche oder intermittierende Analyse des Abgases eine sehr hohe Sicherheit. Da heterogenkatalysierte Gasphasenoxidationen im Allgemeinen bei Temperaturen im Bereich von 300 bis 600°C durchgeführt werden, ist somit bereits eine signifikante Vorwärmung des Abgases ohne den Aufwand einer kontinuierlichen oder intermittierenden Analyse mit Regelung möglich.

Als Oxidationsreaktoren kommen beim erfindungsgemäßen Verfahren sowohl katalytisch als auch nicht-katalytisch arbeitende Oxidationsreaktoren in Betracht.

Bei einem katalytischen Oxidationsreaktor erfolgt die oxidative Umsetzung an einem heterogenen Katalysator, welcher sich in einem Katalysatorbett befindet, durch das das zu oxidierende Abgas durchgeleitet wird. Als Katalysatoren können im Allgemeinen die dem Fachmann zur oxidativen Reinigung von Abgasen bekannten Katalysatoren eingesetzt werden. Als geeignetes Beispiel seien Palladium und/oder Platin auf einem Träger wie etwa Aluminiumoxid genannt. Die katalytische oxidative Umsetzung erfolgt in der Regel bei einer Temperatur im Bereich von 200 bis 650°C.

Bei einem nicht-katalytischen Oxidationsreaktor erfolgt die oxidative Umsetzung im Allgemeinen thermisch, das heißt durch Verbrennung, bei einer Temperatur von üblicherweise 700 bis 1200°C. Die Verbrennung erfolgt dabei in einer sogenannten Brennkammer, in die das zu verbrennende Abgas eingeleitet wird. Bei einem entsprechend hohen Gehalt an brennbaren Komponenten und/oder einer entsprechend hohen Temperatur des zugeführten Abgases ist gegebenenfalls eine autotherme Verbrennung möglich. Eine autotherme Verbrennung zeichnet sich dadurch aus, dass der erforderliche Brennstoff ausschließlich aus dem zu verbrennenden Abgas stammt. Ist der Gehalt an brennbaren Komponenten und/oder die Temperatur des Abgases entsprechend niedrig, so kann der Einsatz eines sogenannten Hilfs- oder Stützbrenners erforderlich sein. Dieser wird mit einem zusätzlichen Brennstoff, beispielsweise Erdgas oder Öl, betrieben und liefert die für die Verbrennung erforderliche Restenergie. Im Allgemeinen enthalten auch Brennkammern, welche autotherm betrieben werden, einen Stützbrenner, um insbesondere das Anfahren der Anlage zu ermöglichen und bei Schwankungen oder Störungen der Abgaszufuhr eine fortlaufende Verbrennung sicher zu stellen.

Wird ein nicht-katalytischer Oxidationsreaktor eingesetzt, so ist es gegebenenfalls vorteilhaft, wenn sich die vorgeschaltete Geschwindigkeitsstrecke direkt vor dem Einlass in die Brennkammer befindet beziehungsweise im Brennerkopf integriert ist. Mögliche Ausgestaltungsformen hierzu sind beispielsweise in G.-G. Börger et al., VDI-Berichte Nr. 286, 1977, Seite 131 bis 134 und insbesondere Abbildung 5 beschrieben.

Bevorzugt setzt man beim erfindungsgemäßen Verfahren als Oxidationsreaktor eine Brennkammer ein.

Je nach Erfordernis ist es beim erfindungsgemäßen Verfahren möglich, vor dem eigentlichen Oxidationsreaktor noch eine Vorrichtung zur Aufheizung des zugeführten Abgases vorzuschalten. Als geeignete Vorrichtungen seien beispielsweise mit Rauchgas betriebene Wärmetauscher oder regenerative Wärmespeichermedien wie etwa in J.M. Klobucar, Chem. Eng., February 2002, Seite 62 bis 67 beschrieben, genannt.

Um trotz der oben genannten Maßnahmen zur weiteren Sicherheit einen Flammenrückschlag faktisch auszuschließen, setzt man beim erfindungsgemäßen Verfahren in der Abgaszufuhr im Allgemeinen noch eine oder mehrere Sicherheitsmaßnahmen gegen Flammenrückschlag ein. Als geeignete Maßnahmen seien Flammendurchschlagssicherungen, wie Tauchsicherungen, Flammenfilter, Bandsicherungen, Detonationssicherungen und Maßnahmen wie die rückzündsichere Eindüsung in die Brennkammer genannt. Sie sind beispielsweise in G.-G. Börger et al., VDI-Berichte Nr. 286, 1977, Seite 131 bis 134, in K. Schampel et al., Gas wärme international 27, 1978, November, Seite 629 bis 635 und in W. Hüning, Chem.-Ing.-Tech. 57, 1985, Seite 850 bis 857 beschrieben. Diese Sicherheitsmaßnahmen können sich vor und/oder nach der Geschwindigkeitsstrecke befinden; bevorzugt befinden sie sich in Strömungsrichtung gesehen vor der Geschwindigkeitsstrecke.

In einer bevorzugten Variante des erfindungsgemäßen Verfahrens wird das gebildete, heiße Rauchgas zur Aufheizung externer Energieträger energetisch verwertet. Als energetische Verwertung seien hier insbesondere die Erzeugung von Warmwasser, Dampf und überhitzten Dampf genannt. Die entsprechenden Verfahren zur energetische Verwertung des Rauchgases sowie die hierfür erforderlichen Apparate sind dem Fachmann allgemein bekannt.

In einer besonders bevorzugten Variante des erfindungsgemäßen Verfahrens stellt man die gewünschte Temperatur des rückzuführenden Rauchgases durch Mischung von Rauchgas zweier unterschiedlicher Temperaturen ein, wobei der Unterschied in den Temperaturen des Rauchgases durch die energetische Verwertung in Form eines zwischengeschalteten Wärmetauschers erhalten wird.

Das beim erfindungsgemäßen Verfahren einzusetzende Abgas kann aus den verschiedensten Quellen stammen, in denen ein zu entsorgendes Gas gebildet wird, welches Sauerstoff und eine brennbare Komponente enthält. Als Beispiele möglicher Quellen seien chemische Verfahren, insbesondere Oxidationsreaktionen, Arbeitsverfahren, wie etwa das Lackieren oder das chemische Reinigen sowie natürliche Quellen genannt.

Als brennbare Komponente im Abgas kommen beim erfindungsgemäßen Verfahren prinzipiell alle mit Sauerstoff oxidierbaren anorganischen oder organischen Verbindungen in Frage, welche unter den vorliegenden Bedingungen gasförmig vorliegen. Dabei kann es sich um eine einzige Verbindung als auch um ein Gemisch verschiedener Verbindungen handeln. Geeignete brennbare Komponenten sind beispielsweise Wasserstoff, aliphatische, aromatische oder araliphatische Kohlenwasserstoffe, Alkohole, Aldehyde, Ketone, Carbonsäuren, Ammoniak oder Amine. Im Allgemeinen enthält das zu entsorgende Abgas 0,01 bis 10 Vol.-%, bevorzugt 0,01 bis 5 Vol.-% und besonders bevorzugt 0,1 bis 2 Vol.-% an brennbaren Komponenten.

Bevorzugt setzt man das erfindungsgemäße Verfahren zur Reinigung von Abgasen ein, welche aus der heterogenkatalysierten Gasphasenoxidation von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal, von Ethen zu Ethylenoxid, von Propen zu Acrolein, von Propen und Ammoniak zu Acrylnitril, von Olefinen zu Aldehyden oder Ketonen, von Methanol zu Formaldehyd und/oder von Methan und Ammoniak zu Blausäure und besonders bevorzugt von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal und/oder von Ethen zu Ethylenoxid stammen.

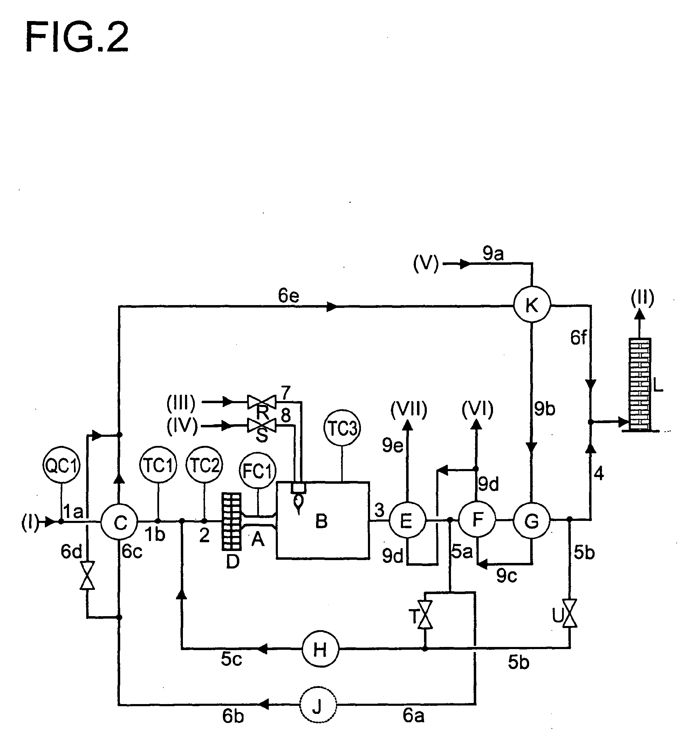

Das vereinfachte Verfahrensfließbild einer bevorzugten Ausführungsform ist in Abbildung 2 dargestellt. Die Apparate und Ventile sind mit Großbuchstaben versehen und in der Beschreibung näher bezeichnet. Die Leitungen sind in arabischen Zahlen durchnummeriert. Die Ein- und Ausgänge von Stoffströmen sind in römischen Zahlen nummeriert und ebenfalls in der Beschreibung näher erläutert. Die Meß- und Regeleinrichtungen tragen die übliche Nomenklatur mit nachgestellter Ziffer zur Durchnummerierung: "Q" steht für Analysenmessung, "T" für Temperaturmessung, "F" für Durchflussmessung und "C" für Regelkreis.

Das Abgas (I) wird über Leitung (1a), den Wärmetauscher (C), in dem das Abgas durch hindurchströmendes Rauchgas vorgeheizt wird, und Leitung (1b) zugeführt. Über Leitung (5c) wird rückgeführtes Rauchgas zugegeben und zusammen mit dem frisch zugeführten Abgas aus Leitung (1b) über Leitung (2) und einer statischen Flammendurchschlagssicherung (D), bevorzugt eine Bandsicherung, zur Geschwindigkeitsstrecke (A) zugeführt, in der die Strömungsgeschwindigkeit des hindurchströmenden Gases höher ist als die Flammenrückschlagsgeschwindigkeit. Vorteilhafterweise werden das Abgas und das rückgeführte Rauchgas vor der Geschwindigkeitsstrecke vermischt, beispielsweise durch Einsatz eines statischen Mischers oder einer Teilströmeeinmischung. Nach der Geschwindigkeitsstrecke (A) wird das Gas über einen oder mehrere Brenner (nicht dargestellt) in die Brennkammer (B) eingeleitet. Diese enthält insbesondere zum Anfahren sowie für den Einsatz nicht autotherm brennbarer Abgase eine sogenannten Hilfsbrenner, der als separater Brenner oder integriert in den Brenner oder den Brennern vorliegen kann und welcher bei Bedarf über Leitung (7) mit Luft (III) und über Leitung (8) mit Brennstoff (IV), beispielsweise Erdgas, betrieben werden kann. In der Brennkammer, in der gegebenenfalls auch noch weitere Brenner für andere Stoffe und Abgase integriert sein können, erfolgt die oxidative Umsetzung des Abgases zum Rauchgas. Dieses verlässt in heißem Zustand die Brennkammer (B) und wird über Leitung (3) zu einer Reihe hintereinandergeschalteter Wärmetauscher geführt. In Wärmetauscher (E) wird überhitzter Dampf (VII), in Wärmetauscher (F) gesättigter Dampf und in Wärmetauscher (G) Warmwasser (Speisewasservorwärmung) erzeugt. Das energetisch genutzte und abgekühlte Rauchgas gelangt über Leitung (4) zum Schornstein (L) und wird als Rauchgas (II) in die Atmosphäre abgegeben. An dieser Stelle sei bemerkt, dass im Falle eines Schadstoffe enthaltenden Rauchgases, wie etwa Schwefeloxide oder Chlorverbindungen, vor der Emission in die Atmosphäre noch diverse Reinigungsvorrichtungen zwischengeschaltet sein können. Der rückzuführende Teil des Rauchgases wird über die Leitungen (5a) und (5b) entnommen. Durch die zwischengeschalteten Wärmetauscher wird eine entsprechende Temperaturdifferenz zwischen dem Rauchgas in Leitung (5a) und dem in Leitung (5b) sichergestellt, so dass durch geeignete Mischung eine Einstellung der Temperatur in einem breiten Bereich möglich ist. Das rückzuführende Rauchgas wird dann über Leitung (5c) sowie über ein Rückführgebläse (H) zur Geschwindigkeitsstrecke (A) geleitet. Der Teil des Rauchgases, welcher zum Betrieb des Wärmetauschers (C) eingesetzt wird, wird ebenfalls über Leitung (5a) entnommen und über Leitung (6a), einem optional vorhandenen Gebläse (J), Leitung (6b) und Leitung (6c) dem Wärmetauscher (C) zugeführt. Zur raschen Regelung der Temperatur im Wärmetauscher (C) besitzt dieser über Leitung (6d) einen Umgang. Das Rauchgas kann dann anschließend über Leitung (6e), einem Wärmetauscher (K) zur Vorheizung des Speisewassers (V) und Leitung (6f) ebenfalls zum Schornstein (L) geleitet werden. Die energetische Verwertung des heißen Rauchgases erfolgt wie beispielhaft in Abbildung 2 dargestellt durch Erzeugung von Dampf (VI) und/oder überhitzten Dampf (VII) unter Einsatz der bereits genannten Wärmetauscher (K), (G), (F) und (E).

Es sei erwähnt, dass je nach Ausführungsform der Wärmetauscher (E) beispielsweise auch in der Brennkammer integriert sein kann, so dass Leitung (3) praktisch entfallen würde.

Im Folgenden sind die Regelkreise der bevorzugten Ausführungsform näher erläutert. Zur besseren Übersichtlichkeit wurden in Abbildung 2 die Steuerleitungen weggelassen. "TC1" mißt die Temperatur des Abgases direkt nach dem Wärmetauscher (C). Dieser Meßwert dient zur Temperaturkontrolle des vorgeheizten Abgases und regelt über die Ventile (P) und (Q) die Temperatur des vorgeheizten Abgases. "TC2" mißt die Temperatur des mit dem rückgeführten Rauchgas gemischten Abgases und kann optional über die Ventile (T) und (U) zur Feinregelung der Temperatur in der Geschwindigkeitsstrecke (A) eingesetzt werden. "FC1" mißt die Strömungsgeschwindigkeit in der Geschwindigkeitsstrecke (A) und dient zur Regelung des Volumenstroms an rückgeführtem Rauchgas über die Ventile (T) und (U). "TC3" mißt die Temperatur in der Brennkammer (B) und schaltet bei Bedarf über die Ventile (R) und (S) den Hilfsbrenner zu beziehungsweise regelt diesen. "QC1" mißt die Konzentration an brennbaren Komponenten im Abgas und liefert damit einen Parameter, aus dem die Temperatur der unteren Explosionsgrenze ermittelt werden kann. Entsprechend dem gewünschten Sicherheitsabstand ist dafür Sorge zu tragen, dass die Temperatur nach dem Wärmetauscher (C) maximal der gewünschten zulässigen Temperatur entspricht. Der Meßwert von "QC1" kann dabei direkt die maximale Temperatur des vorgeheizten Abgases vorgeben. Steigt die Konzentration an brennbaren Komponenten im Abgas sehr schnell auf einen hohen Wert, so ist über "QC1" auch eine Sicherheitsschaltung möglich. Diese würde dann zum Beispiel die Menge an zurückgeführten Rauchgas durch Hochfahren des Gebläses (H) und/oder durch Öffung von Ventil (U) erhöhen und/oder den Wärmetauscher (C) durch Schließen von Ventil (Q) außer Betrieb setzen. Bei Bedarf wäre auch eine Umschaltung des Wärmetauschers (C) auf einen Kühlmodus, welcher beispielsweise mit Wasser betrieben werden kann, denkbar.

Erreicht die Temperatur in der Brennkammer (B) die obere Grenze des gewünschten Temperaturbereichs, so kann zur Kühlung über "TC3" die Einspeisung zusätzlicher (Umgebungs-) Luft in die Brennkammer angesteuert werden. Diese kann beispielsweise über Ventil (R) und Leitung (7) oder über eine zusätzliche Vorrichtung, welche in Abbildung 2 nicht dargestellt ist, zugeführt werden. Des Weiteren ist es auch möglich, über "TC3" auch eine ausreichende Rückführung von kaltem Rauchgas, beispielsweise über Ventil (U) und dem Gebläse (H) zu induzieren. Die Rückführung von kaltem Rauchgas zur Regelung der Temperatur in der Brennkammer kommt insbesondere zum Tragen, wenn das Abgas einen hohen Gehalt an brennbaren Komponenten aufweist und somit also sein Energiegehalt relativ hoch ist.

Das erfindungsgemäße Verfahren ermöglicht die oxidativen Reinigung eines Sauerstoff und eine brennbare Komponente enthaltenden Abgases unter Gewährleistung eines sicherheitstechnisch sicheren Dauerbetriebs. Das erfindungsgemäße Verfahren ist energetisch gesehen auch bei einer deutlichen Unterschreitung der unteren Explosionsgrenze des anfallenden Abgases weitgehend autark und verkraftet insbesondere auch wechselnde Abgasmengen und wechselnde Abgaszusammensetzungen problemlos. Die weitgehende energetische Unabhängigkeit des erfindungsgemäßen Verfahrens wird besonders vorteilhaft durch die Vorwärmung des Abgases erreicht, welche durch den Einsatz der Geschwindigkeitsstrecke und der Sicherstellung, dass die Strömungsgeschwindigkeit des hindurchströmenden Gases höher ist als die Flammenrückschlagsgeschwindigkeit, ermöglicht. Die bevorzugte Regelung der Strömungsgeschwindigkeit durch rückgeführtes Rauchgas ermöglicht eine automatische Anpassung des Verfahrens an schwankende Abgasmengen und schwankende Konzentrationen brennbarer Komponenten. Durch die spezielle Rückführung von Rauchgas wird zudem der Einsatz von Fremdgasen, wie etwa Luft, vermieden.

Des Weiteren betrifft die Erfindung eine Vorrichtung zur oxidativen Reinigung eines Sauerstoff und eine brennbare Komponente enthaltenden Abgases gemäß dem erfindungsgemäßen Verfahren umfassend
a) eine Zufuhrleitung (1) für das Abgas (I);
b) einen Oxidationsreaktor (B);
c) eine Geschwindigkeitsstrecke (A), welche sich zwischen der Zufuhrleitung (1) und der Abgasseite des Oxidationsreaktors (B) befindet;
d) eine Leitung (5) zur Rückführung von Rauchgas, welche sich zwischen der Rauchgasseite des Oxidationsreaktors (B) und der Abgasseite der Geschwindigkeitsstrecke (A) befindet; und
e) eine Abfuhrleitung (4) für das Rauchgas (II).

Ein entsprechendes Blockdiagramm ist in Abbildung 1 gegeben.

## Patentansprüche

1. Verfahren zur oxidativen Reinigung eines Sauerstoff und eine brennbare Komponente enthaltenden Abgases durch oxidative Umsetzung in einem Oxidationsreaktor, bei dem das Abgas vor der Einleitung in den Oxidationsreaktor eine Geschwindigkeitsstrecke durchläuft, in der die Strömungsgeschwindigkeit des hindurchströmenden Gases höher ist als die Flammenrückschlagsgeschwindigkeit, **dadurch gekennzeichnet, dass** man einen Teilstrom des bei der oxidativen Umsetzung frei werdenden Rauchgases zur Geschwindigkeitsstrecke zurückführt.

2. Verfahren nach Anspruch 1, **dadurch gekennzeichnet, dass** man durch die Rückführung von Rauchgas in der Geschwindigkeitsstrecke eine Strömungsgeschwindigkeit einstellt, welche mindestens das 1,2-fache der Flammenrückschlagsgeschwindigkeit beträgt.

3. Verfahren nach den Ansprüchen 1 bis 2, **dadurch gekennzeichnet, dass** man die Rauchgase volumenstromgeregelt zur Geschwindigkeitsstrecke zurückführt und als Regelgröße die Strömungsgeschwindigkeit in der Geschwindigkeitsstrecke heranzieht.

4. Verfahren nach den Ansprüchen 1 bis 3, **dadurch gekennzeichnet, dass** man das Abgas vor der Geschwindigkeitsstrecke über einen mit der Abwärme des Rauchgases betriebenen Wärmetauscher vorheizt.

5. Verfahren nach den Ansprüchen 1 bis 4, **dadurch gekennzeichnet, dass** man die Temperatur des vorgeheizten Abgases derart einstellt, dass die untere Explosionsgrenze unter dem vorhandenen Druck und der vorhandenen Gaszusammensetzung bei mindestens dem ⁴/₃-fachen Wert der vorliegenden Konzentration an brennbaren Komponenten liegt.

6. Verfahren nach den Ansprüchen 1 bis 4, **dadurch gekennzeichnet, dass** man ein Abgas einsetzt, welches aus einer heterogenkatalysierten Gasphasenoxidation stammt und die Temperatur des vorgeheizten Abgases derart einstellt, dass sie maximal der heißesten Temperatur der heterogenkatalysierten Gasphasenoxidation entspricht.

7. Verfahren nach den Ansprüchen 1 bis 6, **dadurch gekennzeichnet, dass** man als Oxidationsreaktor eine Brennkammer einsetzt.

8. Verfahren nach den Ansprüchen 1 bis 7, **dadurch gekennzeichnet, dass** man ein Abgas einsetzt, welches aus der heterogenkatalysierten Gasphasenoxidation von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal und/oder von Ethen zu Ethylenoxid stammt.

9. Vorrichtung zur oxidativen Reinigung eines Sauerstoff und eine brennbare Komponente enthaltenden Abgases gemäß dem Verfahren nach den Ansprüchen 1 bis 8 umfassend
a) eine Zufuhrleitung (1) für das Abgas (I);
b) einen Oxidationsreaktor (B);
c) eine Geschwindigkeitsstrecke (A), welche sich zwischen der Zufuhrleitung (1) und der Abgasseite des Oxidationsreaktors (B) befindet;
d) eine Leitung (5) zur Rückführung von Rauchgas, welche sich zwischen der Rauchgasseite des Oxidationsreaktors (B) und der Abgasseite der Geschwindigkeitsstrecke (A) befindet; und
e) eine Abfuhrleitung (4) für das Rauchgas (II).
